# DEMANDE DE BREVET EUROPEEN

(11) **EP 4 391 568 A1**
(43) Date de publication de la demande: **26.06.2024**
(21) Numéro de dépôt: 23203937.0
(22) Date de dépôt: 17.10.2023
(51) Int. Cl.: H04N 23/54, H04N 23/55, H04N 23/90

(54) **SUPPORT ÉLECTRONIQUE POUR DISPOSITIF D' ACQUISITION D'IMAGE, ENSEMBLE COMPORTANT UN TEL SUPPORT, ET DISPOSITIF D ACQUISITION D'IMAGE COMPORTANT UN TEL ENSEMBLE**

(30) Priorité: 23.12.2022 FR 2214376
(71) Demandeur: IDEMIA Identity & Security France, 92400 Courbevoie (FR)
(72) Inventeur: NGUYEN, Dorian, 92400 Courbevoie (FR); AIT BOUHOU, Rahma, 92400 Courbevoie (FR); SIWEK, Jean-Francois, 92400 Courbevoie (FR); TEYROL, Jean-Michel, 92400 Courbevoie (FR)
(74) Mandataire: Idemia

(57) **Abrégé**

Support électronique (20) comportant un corps qui comporte au moins un premier volet (30) et un deuxième volet (30'), le premier volet (30) et le deuxième volet (30') comportant chacun une face supérieure (31, 31') et une face inférieure (32, 32'), la face supérieure (31) du premier volet (30) et la face supérieure (31') du deuxième volet (30') étant configurées pour supporter chacune un capteur (55, 55') d'unité d'acquisition d'image, le support électronique (20) comportant en outre au moins une charnière (40), l'au moins une charnière (40) étant configurée pour relier entre eux le premier volet (30) et le deuxième volet (30'), la face supérieure (31) du premier volet (30) étant inclinée d'un angle « a » par rapport à la face supérieure (31') du deuxième volet (30'), l'angle « a » étant supérieur à 180°.

## Description

L'invention concerne un support électronique.

Elle concerne plus particulièrement un support électronique pour au moins deux unités d'acquisition d'image.

L'invention s'applique, notamment, à des domaines techniques tels que des systèmes d'acquisition d'images pour la sécurité, pour le suivi et la reconnaissance d'informations notamment biométriques, telles que des iris, d'un individu, ou notamment pour un suivi routier, tel qu'un radar pour véhicules.

Un système d'acquisition d'image pour le suivi et la reconnaissance biométrique d'une iris d'un individu, immobile ou en mouvement, comporte typiquement une caméra montée parallèlement à un support selon un axe de visée de la caméra, un premier moteur configuré pour orienter la caméra selon un axe de rotation considéré comme « vertical » permettant à la caméra d'effectuer un mouvement horizontal de rotation, dit « panoramique », et un second moteur configuré pour orienter la caméra selon un axe de rotation considéré comme « horizontal » permettant à la caméra d'effectuer un mouvement vertical de rotation, orientant ainsi son inclinaison, aussi dit mouvement de « tilt ».

Dans ce système, les deux mouvements en rotation de la caméra (en panoramique et inclinaison) par rapport au support peuvent être combinés pour obtenir un champ de capture sous forme de cône à base rectangulaire.

Or, au moins un inconvénient d'un tel système d'acquisition d'image est de présenter un encombrement relativement important dans le plan du support résultant de la disposition de la caméra parallèlement au support.

Un autre système d'acquisition d'image pour le suivi et la reconnaissance biométrique d'une iris d'un individu, immobile ou en mouvement, comporte typiquement une caméra montée fixement et agencée perpendiculairement à un support selon l'axe de visée de la caméra, un miroir positionné en face de la caméra et transversal à l'axe de visée de la caméra, le miroir étant motorisé selon deux axes de rotation par rapport à l'axe de visée de la caméra, permettant ainsi au miroir d'effectuer un mouvement horizontal de rotation, dit « panoramique » et un mouvement vertical de rotation, dit « tilt ».

Dans un tel système, les deux mouvements en rotation du miroir peuvent être combinés pour obtenir un champ de capture sous forme de cône à base rectangulaire. Dans un tel système, la caméra comporte typiquement un objectif et un capteur, sur lequel l'objectif envoie une image.

Un tel système d'acquisition d'image présente l'avantage d'un encombrement relativement réduit dans le plan du support par rapport au système d'acquisition d'image préalablement présenté.

Néanmoins, au moins un inconvénient d'un tel système d'acquisition d'image est de présenter un champ de capture limité, notamment en comparaison du précédent système d'acquisition d'image présenté.

En effet, notamment le mouvement horizontal de rotation, dit en « panoramique », du miroir par rapport à l'axe de visée de la caméra engendre une rotation de l'image réfléchie par le miroir par rapport au centre du capteur de la caméra.

L'image réfléchie par le miroir ne se retrouve alors plus sur la même ligne horizontale du capteur de la caméra.

Ainsi, plus l'angle de rotation est grand lors du mouvement en panoramique du miroir, plus le risque d'obtenir une image, notamment des yeux et/ou des iris d'un individu, partiellement ou complétement en dehors du capteur de la caméra est important. Ceci est notamment dû au fait qu'un capteur de caméra est typiquement de format rectangulaire et non circulaire, et a un dimensionnement standardisé et généralement limité en encombrement.

Par conséquent, une telle rotation de l'image réfléchie par le miroir sur le capteur lors d'un mouvement panoramique engendre une limitation du champ de capture de la caméra.

De plus, l'image perçue par le capteur est alors déformée. La rotation de l'image réfléchie sur le capteur de la caméra nécessite alors une étape supplémentaire lors du traitement de l'image fournie par le système d'acquisition d'image.

Pour surmonter au moins en partie ces inconvénients, il est par exemple proposé un système d'acquisition d'image comportant un dispositif d'acquisition d'image configuré pour acquérir au moins une image selon un axe de visée, dans lequel le dispositif d'acquisition d'image comporte au moins deux unités d'acquisition d'image dont les axes optiques divergent l'un de l'autre.

Une telle disposition permet d'élargir un champ de vision du système d'acquisition d'image au moins selon une direction.

Une telle disposition présente notamment l'avantage pour le suivi et la reconnaissance d'informations biométriques d'un individu de permettre une acquisition des deux iris de l'individu en simultané.

Toutefois, une difficulté est alors de pouvoir maintenir en position les unités d'acquisition d'image l'une par rapport à l'autre, tout en facilitant une synchronisation des images captées par chacune des unités d'acquisition d'image.

La présente invention vise à pallier au moins en partie ces inconvénients, menant éventuellement à d'autres avantages.

A cet effet, est proposé, selon un premier aspect, un support électronique comportant un corps qui comporte au moins un premier volet et un deuxième volet, le premier volet et le deuxième volet comportant chacun une face supérieure et une face inférieure, la face supérieure du premier volet et la face supérieure du deuxième volet étant configurées pour supporter chacune un capteur d'unité d'acquisition d'image, le support électronique comportant en outre au moins une charnière, l'au moins une charnière étant configurée pour relier entre eux le premier volet et le deuxième volet, la face supérieure du premier volet étant inclinée d'un angle « a » par rapport à la face supérieure du deuxième volet, l'angle « a » étant supérieur à 180°.

Dans un exemple de réalisation, l'angle « a » est inférieur ou égal à 220°.

Dans un mode de réalisation, le support électronique comporte plus que deux volets. Par exemple, le support électronique peut comporter au moins un troisième volet.

Le troisième volet supporte par exemple un troisième capteur.

Par exemple, le support électronique peut alors comporter une deuxième charnière par laquelle le troisième volet est relié au deuxième volet.

Un support électronique avec trois volets forme alors un triptyque. Un tel support électronique, comportant au moins trois volets supportant chacun un capteur, est par exemple adapté à une application telle que le suivi multivoie de radar routier.

Dans un mode de réalisation, l'au moins une charnière est flexible.

La flexibilité de l'au moins une charnière permet ainsi à au moins le premier volet et le deuxième volet de former un angle « a » entre eux.

Par exemple, l'au moins une charnière peut être fléchie, ou être courbée, ou être pliée. Dans un mode de réalisation, l'au moins une charnière a une épaisseur amincie par rapport à une épaisseur des au moins un premier volet et un deuxième volet.

Une épaisseur amincie au niveau de l'au moins une charnière par rapport à une épaisseur des volets permet de localiser une zone de pliure sans nécessiter d'élément tiers pour former l'au moins une charnière.

Le support peut par exemple être formé à partir d'une seule plaque.

Par exemple, l'épaisseur amincie de l'au moins une charnière est réalisée par un retrait de matière, par exemple par un usinage, par exemple un fraisage.

Par exemple, l'épaisseur amincie de l'au moins une charnière est réalisée par un laminage.

Dans un mode de réalisation, l'au moins une charnière, le premier volet et le deuxième volet sont formés ensemble d'une seule pièce.

Dans un mode de réalisation, l'au moins une charnière est configurée en outre pour connecter électriquement le premier volet et le deuxième volet entre eux.

Dans un mode de réalisation, au moins un volet parmi le premier volet et le deuxième volet comporte un connecteur configuré pour connecter électriquement le support électronique à une unité externe.

Dans un mode de réalisation, au moins un volet parmi le premier volet et le deuxième volet comporte un multiplexeur configuré pour multiplexer des signaux vidéo provenant des capteurs du premier volet et du deuxième volet et pour transmettre un signal vidéo unique audit connecteur.

Dans un mode de réalisation, le support électronique est une carte à circuit imprimé. L'invention concerne aussi, selon un deuxième aspect, un ensemble comportant un support électronique, comportant tout ou partie des caractéristiques décrites précédemment.

Par exemple, l'ensemble comporte un support d'objectifs.

Par exemple, le support d'objectifs est configuré pour supporter au moins un premier objectif d'une première unité d'acquisition d'image et un deuxième objectif d'une deuxième unité d'acquisition d'image.

Par exemple, le support d'objectifs est configuré pour positionner au moins le premier objectif de la première unité d'acquisition d'image en regard du premier capteur de la première unité d'acquisition d'image et le deuxième objectif de la deuxième unité d'acquisition d'image en regard du deuxième capteur de la deuxième unité d'acquisition d'image.

Par exemple, le support d'objectifs est fixé sur le premier volet et le deuxième volet en maintenant le premier volet incliné de l'angle « a » par rapport au deuxième volet.

L'invention concerne aussi, selon un troisième aspect, un dispositif d'acquisition d'image configuré pour acquérir au moins une image selon un axe de visée.

Par exemple, le dispositif d'acquisition d'image comporte un ensemble tel que décrit précédemment.

Par exemple, le dispositif d'acquisition d'image comporte au moins une première unité d'acquisition d'image et une deuxième unité d'acquisition d'image, la première unité d'acquisition d'image comportant un premier objectif et le premier capteur, qui définissent ensemble un premier axe optique, et la deuxième unité d'acquisition d'image comportant un deuxième objectif et le deuxième capteur, qui définissent ensemble un deuxième axe optique, les premier et deuxième axes optiques, respectivement des première et deuxième unités d'acquisition d'image, divergeant l'un par rapport à l'autre.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
la figure 1 représente une vue de dessus en perspective d'un support électronique selon un exemple de réalisation de l'invention ;
la figure 2 représente une vue de dessous en perspective du support électronique selon l'exemple de réalisation de la figure 1 ;
la figure 3 représente une vue de profil du support électronique selon l'exemple de réalisation de la figure 1 ;
la figure 4 représente une vue de coupe d'un détail, incluant la charnière, du support électronique selon l'exemple de réalisation de la figure 1 ;
la figure 5 représente un exemple d'architecture électronique du support électronique selon l'exemple de réalisation de la figure 1 ;
la figure 6 représente une vue de dessus en perspective d'un ensemble comportant le support électronique selon l'exemple de réalisation de la figure 1 ;
la figure 7 représente une vue de dessous en perspective de l'ensemble de la figure 6 ;
la figure 8 représente une vue en éclaté d'un exemple de dispositif d'acquisition d'image comportant l'ensemble de la figure 6 ; et
la figure 9 représente une vue en perspective du dispositif d'acquisition d'image de la figure 8.

Les éléments identiques représentés sur les figures précitées sont identifiés par des références numériques identiques.

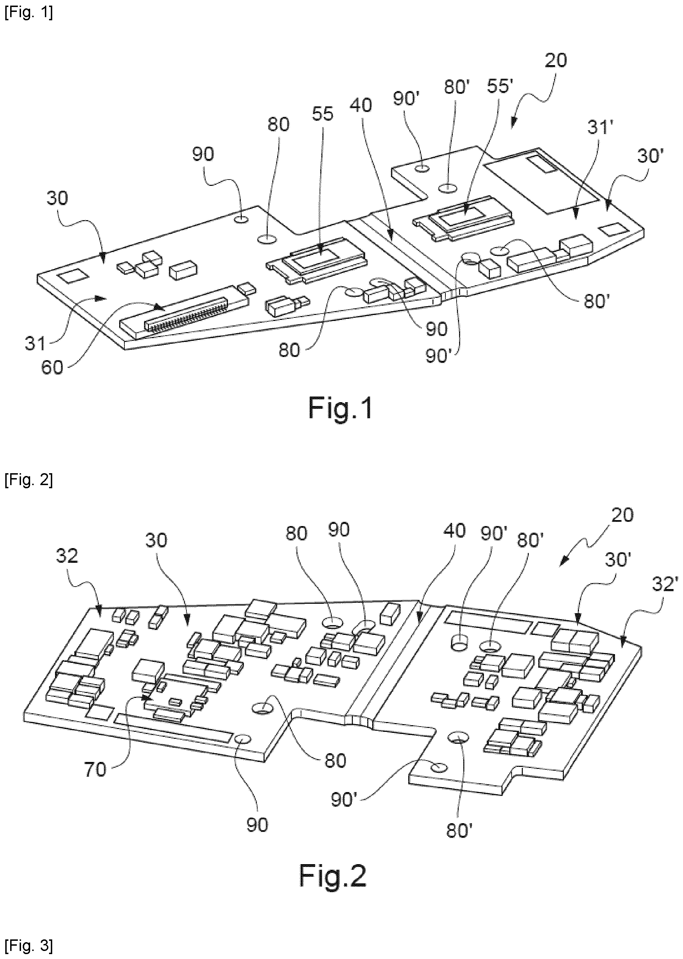

Les figures 1 à 3 présente un support électronique 20 selon un exemple de réalisation de l'invention.

Le support électronique 20 est ici une carte de circuit imprimé, dite PCB pour « printed circuit board ».

Le support électronique 20 comporte principalement un corps, qui comporte ici un premier volet 30 et un deuxième volet 30'.

Le premier volet 30 et le deuxième volet 30' comportent chacun une face supérieure et une face inférieure.

La face supérieure et la face inférieure de chaque volet définissent entre elles une épaisseur du support électronique 20.

En l'occurrence, le premier volet 30 comporte ici une face supérieure 31 et une face inférieure 32, et le deuxième volet 30' comporte ici une face supérieure 31' et une face inférieure 32'.

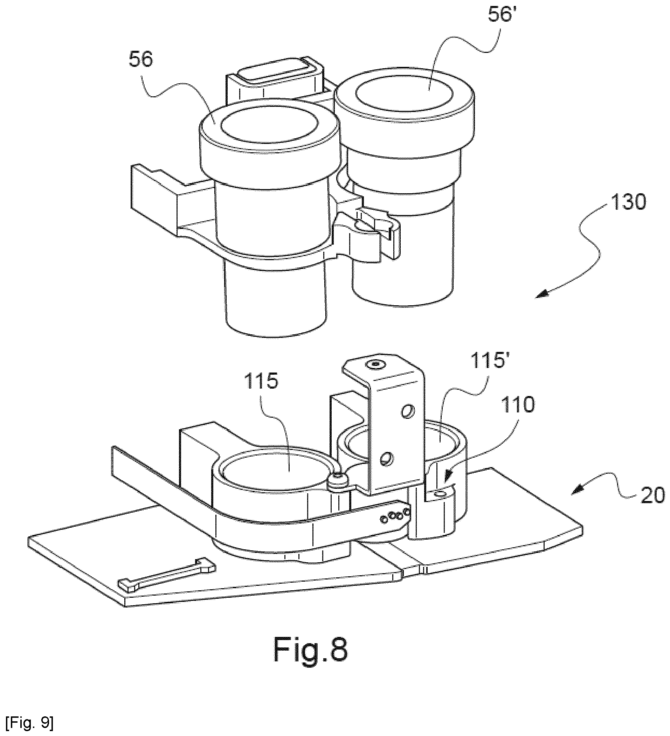

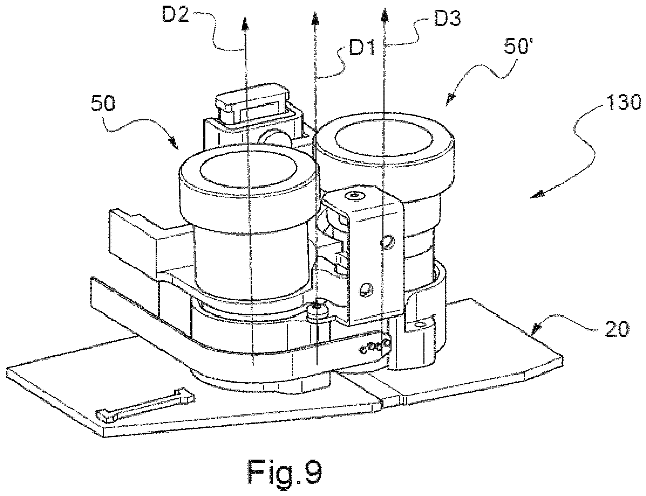

La face supérieure 31, 31' de chacun du premier volet 30 et du deuxième volet 30' désigne ici la face de chaque volet qui est configurée pour supporter un capteur d'unité d'acquisition d'image, décrite en lien avec les figures 8 et 9 par exemple.

Ainsi, dans le présent exemple de réalisation, la face supérieure 31 du premier volet 30' comporte un premier capteur 55 d'une première unité d'acquisition d'image 50, et la face supérieure 31' du deuxième volet 30' comporte un deuxième capteur 55' d'une deuxième unité d'acquisition d'image 50'.

Le support électronique 20 comporte en outre au moins une charnière 40.

La charnière relie entre eux le premier volet 30 et le deuxième volet 30'.

En d'autres termes, la charnière 40 est située entre le premier volet 30 et le deuxième volet 30'.

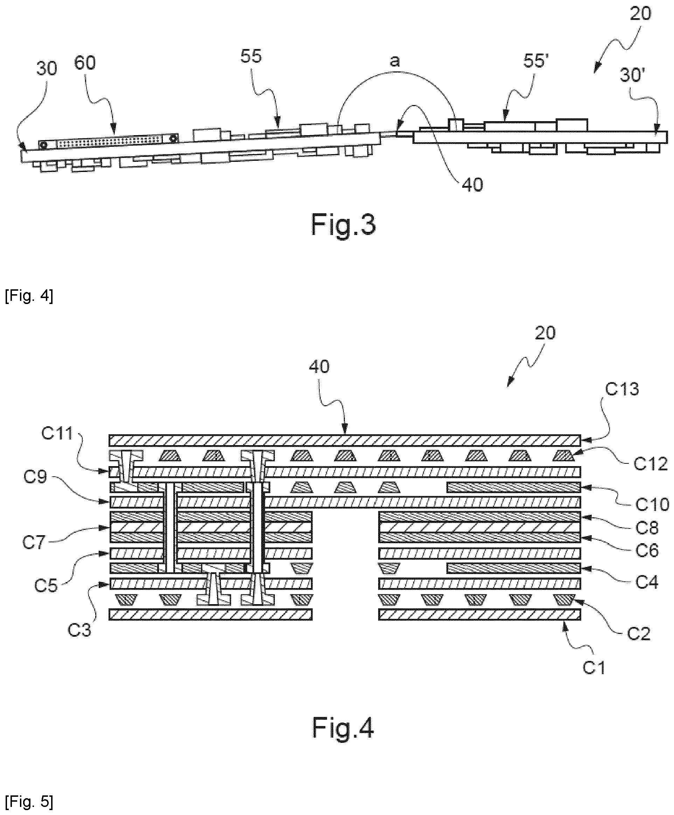

La charnière désigne ici une partie du support électronique 20 qui est configurée pour être fléchie, ou courbée, ou pliée, de sorte que les faces supérieures 31, 31' du premier volet et du deuxième volet forment entre elles un angle « a », mieux visible figure 3.

En particulier, l'angle « a » formé est supérieur à 180°.

Ainsi, lorsque deux unités d'acquisition d'image 50, 50' sont montées sur le support électronique 20, chaque unité d'acquisition d'image 50, 50' ayant un capteur 55, 55' monté sur l'un des volets 30, 30', alors leurs axes optiques divergent.

En d'autres termes, dans une configuration où le support électronique 20 est non plié, la face supérieure 31 du premier volet 30 et la face supérieure 31' du deuxième volet 30' forment ici un angle de 180°, tandis que dans une configuration où le support électronique 20 est plié selon l'invention, la face supérieure 31 du premier volet 30 et la face supérieure 31' du deuxième volet 30' forment ici un angle « a » supérieur à 180°. Par exemple, dans l'exemple illustré, cet angle « a » est ici égal à 182,9°.

Par ailleurs, l'angle « a » formé entre les volets est de préférence inférieur ou égal à 220°.

La charnière 40 est ici flexible, notamment en comparaison du premier volet 30 et du deuxième volet 30'.

Dans le présent exemple de réalisation, la charnière 40 est formée par une partie du support électronique 20 ayant une épaisseur amincie par rapport à l'épaisseur du premier volet 30 ou du deuxième volet 30'.

Ceci permet de créer une zone affaiblie pour orienter un volet par rapport à l'autre.

La charnière est en outre configurée pour connecter électriquement des composants électroniques du premier volet 30 et du deuxième volet 30' entre eux.

Le support électronique 20 comporte en outre un connecteur 60.

Le connecteur 60 est configuré pour permettre une connexion électrique entre le support électronique 20 et un environnement extérieur au support électronique 20.

Le connecteur 60 permet notamment ici une transmission d'au moins un signal, tel qu'une alimentation électrique et/ou un signal vidéo par exemple.

Le connecteur 60 est ici agencé sur le premier volet 30, notamment sur sa face supérieure 31.

Avoir un seul connecteur 60 pour tout le support électronique 20 permet de réduire l'encombrement du support électronique, notamment en réduisant au maximum le nombre de connexion électrique entre le support électronique 20 et son environnement extérieur.

En centralisant un transfert de signaux, vers ou hors le support électronique, une synchronisation des signaux peut être traitée au sein d'un composant du support électronique 20.

La charnière 40 permet ici au moins un transfert des signaux du deuxième capteur 55' du deuxième volet 30' vers le premier volet 30 comportant le connecteur 60, et évite ainsi de disposer un connecteur par volet.

Le support électronique 20 comporte en outre un multiplexeur 70.

Le multiplexeur 70 est configuré ici pour multiplexer des signaux vidéo issus des capteurs 55, 55' respectifs du premier volet 30 et du deuxième volet 30'.

En l'occurrence, le multiplexeur 70 est ici agencé sur le premier volet 30, et notamment sur sa face inférieure 32.

Le multiplexeur 70 est en particulier relié électroniquement au connecteur 60, au premier capteur 55 et au deuxième capteur 55'.

Enfin, le premier volet 30 comporte ici deux trous de fixation 80 et deux trous de centrage 90. De même, le deuxième volet 30' comporte ici également deux trous de fixation 80' et deux trous de centrage 90'.

La figure 4 représente une vue de coupe d'un détail du support électronique 20 au niveau de la charnière 40 selon l'exemple de réalisation de la figure 1.

Le support électronique 20 comporte plusieurs couches.

Ces couches sont traditionnellement superposées et laminées, à chaud ou à froid, pour former le corps du support.

A titre d'exemple, le corps du support électronique 20 est ici formé de onze couches superposées, notées ici C2 à C12.

En outre, une couche C1 et une couche C13, disposées de part et d'autre, sont ici un masque de soudure, notamment un masque liquide photochimique.

En l'occurrence, les couches C2, C4, C6, C8, C10 et C12 sont à base de cuivre, notamment des feuilles de cuivre. Les couches C2, C4, C6, C8, C10 et C12 sont notamment ici gravées par un procédé photochimique.

En l'occurrence, les couches C3, C5, C9 et C11 sont à base de diélectrique, notamment pré-imprégnées.

En l'occurrence, la couche C7 est ici typiquement à base d'un composite de résine époxyde renforcé en fibre de verre de norme FR4.

En l'occurrence, certaines des couches C2 à C12 sont ici percées pour former au moins un trou et l'au moins un trou formé est revêtu de cuivre pour former un via permettant une connexion électrique entre des composants disposés de part et d'autre du corps.

Dans le présent exemple de réalisation, le premier volet 30, le deuxième volet 30' et la charnière 40 sont formés à partir d'un seul corps de carte électronique, i.e. à partir d'une même carte de circuit imprimé PCB.

Ici, la charnière 40 est formée par un amincissement localisé du corps.

L'épaisseur amincie de la charnière 40 est par exemple réalisée par un retrait de matière, par exemple usinage ou fraisage.

Ce retrait de matière est ici réalisé à partir d'une face inférieure du support électronique 20, i.e. une face à partir de laquelle sont ensuite formées la face inférieure du premier volet et du deuxième volet.

Ce retrait de matière correspond ici à un retrait des couches C1 à C8, de sorte à conserver uniquement les couches C9 à C13 au niveau de la charnière 40.

En alternative au retrait de matière, l'épaisseur amincie de la charnière 40 peut être réalisée par un procédé de laminage. Par exemple, lors d'un laminage du corps du support électronique 20, les couches C9 à C12 sont prises en étreinte entre une première partie et une deuxième partie, la première partie correspondant aux couches C1 à C8 avec une absence de matière au niveau d'une zone charnière et la deuxième partie correspondant à la treizième couche C13,

Réaliser l'épaisseur amincie de la charnière 40 par un procédé de laminage permet d'obtenir une charnière 40 d'aspect significativement plus propre en comparaison d'une charnière 40 obtenue par un retrait de matière, notamment par un fraisage. Une épaisseur amincie localement permet ainsi de créer une zone de déformation privilégiée dans le corps du support électronique 20, formant la charnière 40.

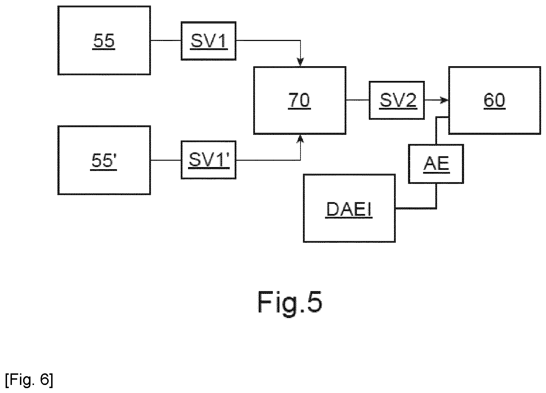

La figure 5 représente une architecture électronique du support électronique 20 selon l'exemple de réalisation de la figure 1.

L'architecture électronique du support électronique 20 montre notamment une interaction entre les capteurs 55 et 55' et le multiplexeur 70.

Les capteurs 55 et 55' transmettent ici chacun un signal vidéo, noté respectivement SV1 et SV1', au multiplexeur 70.

L'architecture électronique du support électronique 20 montre notamment une interaction entre le multiplexeur 70 et le connecteur 60.

Le multiplexeur 70 traite les signaux SV1 et SV1' reçus, et transmet à son tour un signal vidéo multiplexé SV2 au connecteur 60.

L'architecture électronique du support électronique 20 montre notamment que le connecteur 60 permet une distribution interne d'une alimentation en électricité, notée DAEI, pour le support électronique 20, par le transfert d'une alimentation électrique, notée AE, en provenance d'un environnement extérieur, vers chaque composant électronique du support électronique 20, y compris vers le premier capteur 55, le deuxième capteur 55' et le multiplexeur 60.

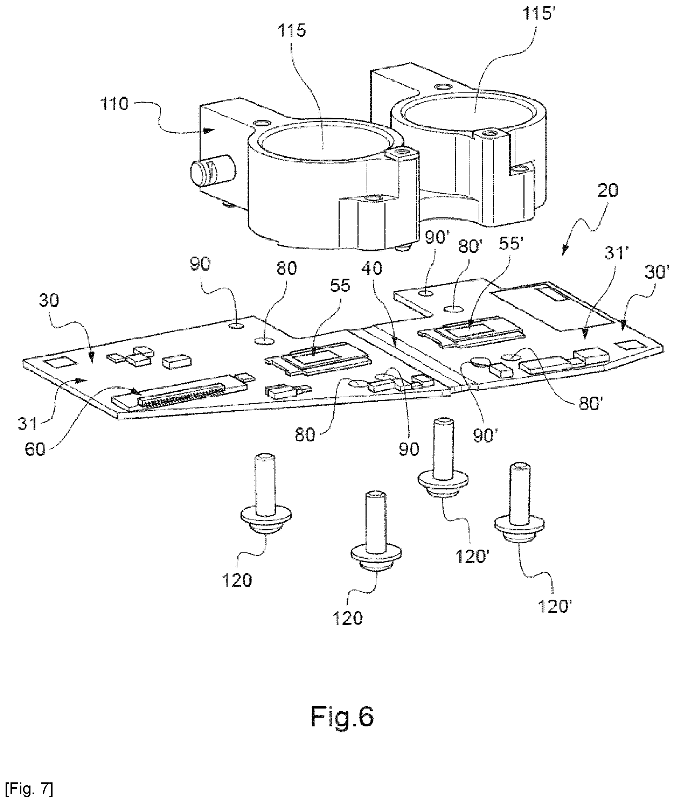

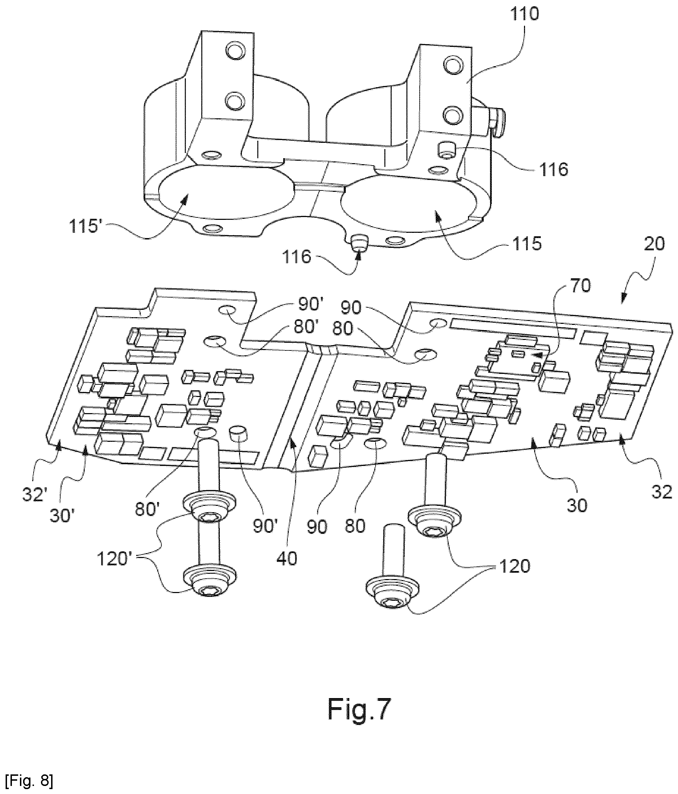

Les figure 6 et 7 représentent une vue de dessus et de dessous, en perspective, d'un ensemble comportant le support électronique 20 tel que décrit précédemment. L'ensemble comporte en outre ici un support d'objectifs 110.

Le support d'objectifs 110 est configuré ici pour supporter deux objectifs : un premier objectif 56 des deux objectifs étant celui d'une première unité d'acquisition d'image 50 et un deuxième objectif 56' des deux objectifs étant celui d'une deuxième unité d'acquisition d'image 50'.

A ces fins, le support d'objectifs 110 comporte ici un premier fourreau 115, configuré pour supporter le premier objectif 56, et un deuxième fourreau 115', configuré pour supporter le deuxième objectif 56'.

Le support d'objectifs 110 est également configuré pour positionner le premier objectif 56 et le deuxième objectif 56' par rapport au capteur d'unité d'acquisition d'image 55, 55' correspondant afin qu'une première image captée par la première unité d'acquisition d'image 50 et une deuxième image captée par la deuxième unité d'acquisition d'image 50' soient focalisées sur le premier capteur 55 et le deuxième capteur 55', respectivement.

Le support d'objectifs 110 est ici agencé sur la face supérieure 31 du premier volet 30 et sur la face supérieure 31' du deuxième volet 30', et enjambe la charnière 40.

Le support d'objectifs 110 est en outre ici configuré pour maintenir plié la charnière 40 de sorte que la face supérieure 31 du premier volet 30 et la face supérieure 31' du deuxième volet 30' forme l'angle « a » voulu.

L'angle « a » est notamment choisi pour éviter qu'au-delà d'une certaine valeur seuil de l'angle « a », dépendante des caractéristiques de l'objectif et du capteur de chaque unité d'acquisition d'image, le champ de l'au moins une première unité d'acquisition d'image soit disjoint de celui de l'au moins une deuxième unité d'acquisition d'image, de sorte à éviter qu'une zone morte apparaisse et à garantir un recouvrement des deux champs de vision.

Par exemple, le premier fourreau 115 est fixe par rapport au deuxième fourreau 115'. Le support d'objectif 110 comporte ici en outre deux pions de centrage 116.

Les deux pions de centrage 116 sont ici configurés pour centrer le support d'objectifs 110 sur le corps du support électronique 20.

Les deux pions de centrage 116 sont agencés sur une face inférieure du support d'objectif 110, destinées à venir sur la face supérieure du corps du support électronique 20.

Dans le présent exemple de réalisation, les deux pions de centrages 116 sont formés en sailli de la face inférieure du support d'objectif 110, et en particulier dans une paroi du premier fourreau 115.

Les deux pions de centrage 116 sont donc ici configurés pour centrer le support d'objectifs 110 sur le support électronique 20 en étant insérés dans les deux trous de centrage 90 du premier volet 30.

Bien entendu, au moins un des deux pions de centrages 116 pourrait être formé en sailli de la face inférieure du support d'objectif 110, dans une paroi du deuxième fourreau 115', et venir s'insérer dans un trou de centrage 90' prévu à cet effet dans le deuxième volet 30'.

L'ensemble comporte en outre ici quatre vis de fixation 120, 120'.

Les quatre vis de fixation 120, 120' sont ici configurées pour maintenir le support d'objectifs 110 au support électronique 20.

Deux vis de fixation 120 sont ici vissées à travers deux trous de fixation 80 du premier volet 30 à la face inférieure du support d'objectifs 110, notamment en étant alignées avec le premier capteur 55 pour optimiser le maintien du support d'objectifs 110 sur le premier volet 30.

Deux autres vis de fixation 120' sont ici vissées à travers deux trous de fixation 80' du deuxième volet 30' à la face inférieure du support d'objectifs 110, notamment en étant alignées avec le deuxième capteur 55' pour optimiser le maintien du support d'objectifs 110 sur le deuxième volet 30'.

Les figures 8 et 9 représentent des vues en perspective d'un dispositif d'acquisition d'image 130 comportant un ensemble tel que décrit précédemment.

Le dispositif d'acquisition d'image 130 est configuré pour acquérir au moins une image selon un axe de visée D1 (illustré figure 9).

Le dispositif d'acquisition d'image 130 comporte ici la première unité d'acquisition d'image 50 et la deuxième unité d'acquisition d'image 50'.

La première unité d'acquisition d'image 50 comporte le premier objectif 56 et le premier capteur 55, qui définissent ensemble un axe optique D2.

La deuxième unité d'acquisition d'image 50' comporte le deuxième objectif 56' et le deuxième capteur 55', qui définissent ensemble un axe optique D3.

Les axes optiques D2, D3, respectivement des première et deuxième unités d'acquisition d'image 50, 50', divergent par rapport à l'axe de visée D1 dudit dispositif d'acquisition d'image 40 selon un angle d'écartement d'une valeur prédéterminée. Dans d'autres termes, une distance d'écartement, entre chaque axe optique D2, D3 et l'axe de visée D1, augmente lorsqu'une distance, selon chaque axe optique D2, D3, par rapport à chaque capteur 55, 55' augmente.

En outre, un angle « b » (non représenté) entre l'axe optique D2 et l'axe optique D3 est sensiblement égal à : b = a - 180°.

Dans un exemple de réalisation considéré ici, la première unité d'acquisition d'image 50 et la deuxième unité d'acquisition d'image 50' sont ici configurées pour qu'en champ lointain, c'est-à-dire à au moins 1 m, voire 1,2 m, une résolution d'image sur le capteur correspondant permet de reconnaître un iris d'un individu, c'est-à-dire qu'un iris de 10,2 mm de diamètre soit imagé par au moins 150 pixels, voire au moins 160 pixels. Par ailleurs, la première unité d'acquisition d'image 50 et la deuxième unité d'acquisition d'image 50' sont ici configurées pour qu'en champ proche, c'est-à-dire à au plus 1 m, voire au plus environ 0,5 m, un champ latéral des deux unités d'acquisition d'image 50, 50' combinées permet de capturer les deux yeux d'un individu, avec une marge permettant un défaut de pointage.

Les objectifs 56, 56' de la première et de la deuxième unités d'acquisition d'image 50, 50' sont choisis pour avoir une distance focale comprise entre 35 mm et 60 mm, par exemple d'environ 50 mm.

Ainsi, le support électronique 20 selon l'invention permet de faire incliner, notamment diverger, les axes optiques D2, D3 des au moins deux unités d'acquisition d'image 50, 50' par rapport à un axe de visée D1 du dispositif d'acquisition d'image 130.

Les axes optiques D2, D3 sont par exemple symétriques par rapport à l'axe de visée D1, qui peut alors être qualifié de « médian ».

En d'autres termes, un tel support électronique 20 permet que les au moins deux unités d'acquisition d'image 50, 50' puissent couvrir un champs plus large de capture d'image par rapport à une configuration où les au moins deux unités d'acquisition d'image 50, 50' ne seraient pas inclinées entre elles.

Selon une option, le dispositif d'acquisition d'image 130 comporte en outre ici un dispositif de translation (visible figure 9).

Le dispositif de translation est configuré pour focaliser une image sur les capteurs.

Le dispositif de translation est ici configuré pour translater simultanément l'objectif respectif 56, 56' de chacune des première et deuxième unités d'acquisition d'image 50, 50' par un unique mouvement de translation, parallèlement à l'axe de visée D1.

Dans l'exemple de réalisation représenté ici, le dispositif de translation comporte une glissière, une vis sans fin et un moteur pas à pas.

Le moteur pas à pas est configuré pour tourner la vis sans fin, laquelle entraine la glissière en translation selon l'axe D1.

## Revendications

1. Support électronique (20) comportant un corps qui comporte au moins un premier volet (30) et un deuxième volet (30'), le premier volet (30) et le deuxième volet (30') comportant chacun une face supérieure (31, 31') et une face inférieure (32, 32'), la face supérieure (31) du premier volet (30) et la face supérieure (31') du deuxième volet (30') étant configurées pour supporter chacune un capteur (55, 55') d'unité d'acquisition d'image (50, 50'), le support électronique (20) comportant en outre au moins une charnière (40), l'au moins une charnière (40) étant configurée pour relier entre eux le premier volet (30) et le deuxième volet (30'), la face supérieure (31) du premier volet (30) étant inclinée d'un angle « a » par rapport à la face supérieure (31') du deuxième volet (30'), l'angle « a » étant supérieur à 180°.

2. Support électronique selon la revendication 1, dans lequel l'au moins une charnière (40) est flexible.

3. Support électronique selon l'une des revendications 1 ou 2, dans lequel l'au moins une charnière (40) a une épaisseur amincie par rapport à une épaisseur des au moins un premier volet (30) et un deuxième volet (30').

4. Support électronique selon l'une quelconque des revendications 1 à 3, dans lequel le premier volet (30) et le deuxième volet (30') sont formés ensemble d'une seule pièce.

5. Support électronique selon l'une quelconque des revendications 1 à 4, dans lequel l'au moins une charnière (40) est configurée en outre pour connecter électriquement le premier volet (30) et le deuxième volet (30') entre eux.

6. Support électronique selon l'une quelconque des revendications 1 à 5, dans lequel au moins un volet parmi le premier volet (30) et le deuxième volet (30') comporte un connecteur (60) configuré pour connecter électriquement le support électronique à une unité externe.

7. Support électronique selon la revendication 6, dans lequel au moins un volet parmi le premier volet (30) et le deuxième volet (30') comporte un multiplexeur (70) configuré pour multiplexer des signaux vidéo provenant des capteurs (55, 55') du premier volet (30) et du deuxième volet (30') et pour transmettre un signal vidéo unique audit connecteur (60).

8. Support électronique selon l'une quelconque des revendications 1 à 7, dans lequel le support électronique (20) est une carte à circuit imprimé.

9. Ensemble comportant un support électronique (20) selon l'une quelconque des revendications 1 à 8, et comportant un support d'objectifs (110), le support d'objectifs (110) étant configuré pour supporter au moins un premier objectif (56) d'une première unité d'acquisition d'image (50) et un deuxième objectif (56') d'une deuxième unité d'acquisition d'image (50'), et le support d'objectifs (110) étant configuré pour positionner au moins le premier objectif (56) de la première unité d'acquisition d'image (50) en regard du premier capteur (55) de la première unité d'acquisition d'image (50) et le deuxième objectif (56') de la deuxième unité d'acquisition d'image (50') en regard du deuxième capteur (55') de la deuxième unité d'acquisition d'image (50'), le support d'objectifs (110) étant en outre fixé sur le premier volet (30) et le deuxième volet (30') en maintenant le premier volet (30) incliné de l'angle « a » par rapport au deuxième volet (30').

10. Dispositif d'acquisition d'image (130) configuré pour acquérir au moins une image selon un axe de visée (D1), le dispositif d'acquisition d'image (130) comportant un ensemble selon la revendication 9 et au moins une première unité d'acquisition d'image (50) et une deuxième unité d'acquisition d'image (50'), la première unité d'acquisition d'image (50) comportant un premier objectif (56) et le premier capteur (55), qui définissent ensemble un premier axe optique (D2), et la deuxième unité d'acquisition d'image (50') comportant un deuxième objectif (56') et le deuxième capteur (55'), qui définissent ensemble un deuxième axe optique (D3), les premier et deuxième axes optiques (D2), (D3), respectivement des première et deuxième unités d'acquisition d'image (50, 50'), divergeant l'un par rapport à l'autre.
